# EUROPEAN PATENT APPLICATION

(11) **EP 4 606 470 A1**
(43) Date of publication of application: **27.08.2025**
(21) Application number: 23896833.3
(22) Date of filing: 29.11.2023
(51) Int. Cl.: B01J 13/00, C01B 33/158, B01J 20/10, C04B 14/06, C04B 30/02, C04B 38/00, C04B 41/64, B61D 17/18

(54) **PREPARATION SYSTEM AND METHOD FOR ROLLED AEROGEL MATERIAL**

(30) Priority: 29.11.2022 CN 202211517601
(71) Applicant: YI JIANG FUTURE MATERIALS CO., LTD., Zhenjiang, Jiangsu 212200 (CN)
(72) Inventor: WU, Jinyuan, Zhenjiang, Jiangsu 212200 (CN); SHENG, Yi, Zhenjiang, Jiangsu 212200 (CN)
(74) Representative: Misselhorn, Hein-Martin
(86) International application number: PCT/CN2023/135136
(87) International publication number: WO 2024/114689

(57) **Abstract**

A system and method for preparing an aerogel material web are provided, wherein the system includes a gel preparation module for obtaining a wet gel for preparing the aerogel material web; a gel winding module for alternately stacking and winding the wet gel and a flow-guiding mesh to form a roll-shaped composite wet gel material; a gel modification module for performing hydrophobic modification on the composite wet gel material using a modifier solution; and a drying module for performing supercritical drying on the hydrophobically modified composite wet gel material. The flow-guiding mesh includes multiple interleaved flow-guiding channels, allowing the modifier solution to flow between the layers of the wet gel, wherein the flow-guiding channels are structured with multiple alternately connected branched flow-guiding sections and merging links to regulate the flow rate of the modifier solution between the layers of the wet gel.

## Description

### BACKGROUND OF THE APPLICATION

### 1. Technical Field

The present disclosure relates to the field of aerogel technology, and more particularly to a system and method for preparing an aerogel material web.

### 2. Description of Related Art

Aerogel is a special material with a nanoporous network structure, characterized by its low density and low thermal conductivity, among other advantages. It has attracted significant attention and has been widely applied in fields such as thermal protection and new energy vehicles. In practical applications, the porous structure of aerogel makes it highly susceptible to adsorbing and adsorbing moisture from the air, which negatively impacts its thermal insulation performance. Therefore, imparting good hydrophobic properties to aerogel materials is essential for maintaining stable and excellent thermal insulation performance over long-term use and storage. In the production of aerogel materials, hydrophobic treatment is a critical step.

CN107849764A discloses an improved production process for highly heat-insulating silica aerogel products. The process includes selecting an ethanol aqueous solution as the solvent, adding ammonium fluoride solution and ammonia solution as alkaline catalysts, and incorporating an alcoholic solution of titanium isopropoxide, which dissolves into the mixture, leading to the precipitation of titanium dioxide nanoparticles as metal nanoparticles. Tetraethyl orthosilicate (TEOS) and methyltrimethoxysilane (MTMS) are added individually or in combination to the foregoing solution to obtain a dispersion, which is then stirred into a viscous liquid. An inorganic fiber mat is immersed in the foregoing liquid, and the obtained product undergoes an aging treatment at room temperature. The aged product is then soaked in ethanol to replace all the initial solvent and water mixture used in the first step. Subsequently, a semipure solvent is used to replace the remaining solvent and water mixture from the first step until the liquid within the gel is completely substituted by the solvent.

In the existing art, hydrophobic treatment can be performed before, during, or after the drying process of aerogel. Post-drying modification typically involves exposing the aerogel to a gaseous hydrophobing agent. However, direct contact with the hydrophobing agent may partially degrade the aerogel, reducing its thermal insulation performance, and often resulting in incomplete modification. Modification during drying mainly involves introducing a hydrophobic agent into the supercritical ethanol drying process. However, this method is operationally complex, requires stringent control of temperature and pressure, and poses significant safety risks. Pre-drying modification generally entails adding a hydrophobing agent to the precursor cogel or immersing the wet gel in an organic solvent containing the hydrophobic agent. However, this method is difficult to control, often leading to non-uniform hydrophobic modification of the aerogel material web.

Furthermore, due to differences in understanding among those skilled in the art, and considering that the applicant has reviewed a large number of documents and patents in the course of developing the present disclosure, not all details can be fully elaborated due to space constraints. However, this does not imply that the present disclosure lacks the features of the existing art. On the contrary, the present disclosure incorporates all relevant features existing technologies. The applicant further reserves the right to supplement the background section with additional existing art details as necessary, in accordance with applicable regulations.

### SUMMARY OF THE APPLICATION

To address the shortcomings of the existing art, the present disclosure provides a system and method for preparing an aerogel material web, aiming to solve at least one or more technical issues existing in the existing art.

The present disclosure provides a highly efficient liquid-phase hydrophobic modification method for aerogel material. By designing the modifier flow channels, the modifier is uniformly distributed throughout the wet gel, ensuring the hydrophobicity of the final product. Meanwhile, this method is also applicable to aerogel products that are non-hydrophobic or incompletely hydrophobic. This method enhances the production efficiency, effectively reduces production costs, and produces aerogel materials with excellent thermal insulation, flame retardancy, and hydrophobic properties. These materials hold broad application prospects in various fields such as new energy vehicles. The method is highly suitable for large-scale production in the aerogel industry.

To achieve the foregoing objective, the present disclosure provides a system for preparing an aerogel material web, comprising:
a gel preparation module, configured to obtain the wet gel required for preparing the aerogel material web;
a gel winding module, configured to alternately stack and wind the wet gel and a flow-guiding mesh to form a roll-shaped composite wet gel material;
a gel modification module, configured to perform hydrophobic modification on the composite wet gel material using a modifier solution; and
a drying module, configured to perform supercritical drying on the hydrophobically modified composite wet gel material ;
wherein the flow-guiding mesh comprises multiple interleaved flow-guiding channels that allow the modifier solution to flow between the layers of the wet gel, and the flow-guiding channels are structured with multiple alternately connected branched flow-guiding sections and merging links, which regulate the flow rate of the modifier solution between the wet gel layers.

Preferably, the branched flow-guiding sections include multiple primary distribution links, each of which connects axially adjacent merging links in an expanding-contracting manner. At least one of the primary distribution links is linearly connected to the merging links. In the present disclosure, the merging links of the flow-guiding channels are divided into multiple reduceddiameter runners by the primary distribution links. This design enhances the flowability of the modifier solution within the flow-guiding channels, promoting rapid movement of the modifier solution across the wet gel layers. Furthermore, it facilitates the removal of displaced solvents or solutes from the composite wet gel layer, preventing the retention of the modifier solution or other solvents that could otherwise reduce modification efficiency.

Preferably, the branched flow-guiding sections further include multiple secondary distribution links, each of which interconnects radially adjacent primary distribution links. In the present disclosure, these secondary distribution links regulate the flow rate and pressure variation of the modifier solution at inlet or outlet nodes of the flow-guiding channels. By utilizing pressure differentials, the modifier solution is induced to flow continuously and smoothly within flow-guiding channels, ensuring uniform penetration and diffusion into the wet gel layers within the flow-guiding mesh, thereby accomplishing effective hydrophobic modification.

Preferably, in each branched flow-guiding section, the centrally located primary distribution link that is linearly connected to adjacent merging links has a smaller diameter than the lateral primary distribution links that are curvedly connected to the same adjacent merging links. Due to the pressure differential between radially adjacent primary distribution links, the centrally located primary distribution link exhibits a higher flow rate. Since it is directly and linearly connected to axially adjacent merging links, the modifier solution is less likely to stagnate or clog compared to the curved fluid channels on both sides, thereby ensuring an unobstructed fluid passage for the modifier solution.

Preferably, the total diameter of multiple primary distribution links is less than or equal to that of the merging links.

Preferably, the diameter of the secondary distribution links is smaller than that of the primary distribution links and/or the merging links.

Preferably, the branched flow-guiding sections of adjacent flow-guiding channels are arranged in an axially staggered manner along the channel direction. When viewed in a radial cross-section, any two adjacent branched flow-guiding sections from different flow-guiding channels are positioned at different sectional planes. This staggered arrangement induces additional pressure differentials between radially and axially adjacent branched flow-guiding sections, thereby promoting the diffusion and movement of the modifier solution between adjacent flow-guiding channels.

Preferably, the curvature radius of the front end of the branched flow-guiding section is larger than that of its rear end.

Preferably, the gel winding module includes a flow-guiding tray for winding the roll-shaped composite wet gel material. The flow-guiding tray comprises:
a straight tube segment, which accommodates the roll-shaped composite wet gel material formed by alternately stacking and winding the wet gel and the flow-guiding mesh, and which includes multiple perforations allowing the modifier solution to flow; and
a disk, which serves as the connecting base of the straight tube segment and includes multiple perforations for circulating the modifier solution.

Preferably, the straight tube segment and the disk have perforations with varying diameters across part or all of their surfaces.

Preferably, the straight tube segment is configured to rotate on the disk surface and is provided with a fluid channel for accommodating and directing the modifier solution to the perforations. Particularly, when the straight tube segment rotates, the centrifugal force accelerates the flow of the modifier solution between the wet gel layers, thereby improving and enhancing the hydrophobic modification efficiency of the wet gel material. Consequently, the final composite aerogel material exhibits superior hydrophobic properties.

Preferably, the gel modification module includes a modification tank, which accommodates the flow-guiding tray and provides a circulating modifier solution to the flow-guiding tray containing the roll-shaped composite wet gel material.

The present disclosure also provides a method for preparing an aerogel material web, comprising the following steps:
providing a wet gel for preparing the aerogel material web;
alternately stacking and winding the wet gel and a flow-guiding mesh to form a roll-shaped composite wet gel material;
performing hydrophobic modification on the roll-shaped composite wet gel material using a modifier solution; and
performing supercritical drying on the hydrophobically modified composite wet gel material;
wherein the flow-guiding mesh comprises multiple interleaved flow-guiding channels that allow the modifier solution to flow between the layers of the wet gel, and the flow-guiding channels are structured with multiple alternately connected branched flow-guiding sections and merging links to regulate the flow rate of the modifier solution between the wet gel layers.

Preferably, the step of performing hydrophobic modification on the roll-shaped composite wet gel material using the modifier solution comprises:
filling the gel modification module with a portion of the modifier solution to immerse the flow-guiding tray carrying the roll-shaped composite wet gel material, and recirculating and pumping another portion of the modifier solution into the gel modification module to allow the modifier solution to infiltrate the flow-guiding tray from top to bottom.

Preferably, the step of performing supercritical drying on the hydrophobically modified composite wet gel material comprises:
cooling a supercritical drying medium; and
feeding the cooled supercritical drying medium into the drying module under pressure, wherein the drying module contains the hydrophobically modified composite wet gel material and operates in a low-temperature feeding mode, and heating the drying module.

As compared to the existing approaches, the present disclosure features a well-design flow channel structure, an alternating arrangement of flow-guiding mesh, and liquid circulation facilitated by the circulation pump and flow-guiding mesh. These improvements significantly enhance the reaction efficiency between the hydrophobic modifier solution and the wet gel by increasing the contact area and mass transfer rate, thereby substantially reducing the modification time, improving the utilization efficiency of the hydrophobic modifier, and reducing its overall consumption while ensuring stable product performance. By recycling and reusing the hydrophobic modifier, solvents consumption is reduced, leading to lower waste discharge and a decreased environmental burden. The present disclosure effectively shortens aerogel production time and reduces production costs, making it suitable for large-scale industrial manufacturing and significantly enhancing the market competitiveness of aerogel products.

### BRIEF DESCRIPTION OF THE DRAWINGS

Fig. 1 is a schematic drawing of a winding and rewinding device according to a preferred embodiment of the present disclosure;
Fig. 2 is a schematic drawing of a winding disk according to a preferred embodiment of the present disclosure, wherein (a) is a front view and (b) is a top view of the winding disk;
Fig. 3 is a schematic drawing of a modification tank according to a preferred embodiment of the present disclosure;
Fig. 4 is a schematic drawing illustrating the winding of wet gel and flow-guiding mesh according to a preferred embodiment of the present disclosure;
Fig. 5 is a schematic drawing of internal flow-guiding channels within the flow-guiding mesh according to a preferred embodiment of the present disclosure; and
Fig. 6 is an enlarged view of region A in Fig. 4.

### List of Signs

| | | | |
|---|---|---|---|
| 1: | wet gel | 31: | flow-guiding channel |
| 2: | winding and rewinding device | 32: | branched flow-guiding section |
| 3: | flow-guiding mesh | 41: | straight tube segment |
| 4: | flow-guiding tray | 42: | disk |
| 5: | modification tank | 51: | liquid inlet |
| 6: | level gauge | 52: | liquid outlet |
| 7: | circulation pump | 53: | monitoring port |
| 8: | control valve | 54: | upper circulation port |
| 9: | flow meter | 55: | lower circulation port |
| 10: | filter | 56: | circulation pipe |
| 11: | connector | 321: | primary distribution link |
| 12: | tray support | 322: | secondary distribution link |
| 13: | nozzle | | |

### DETAILED DESCRIPTION OF THE APPLICATION

### Embodiment 1

According to a preferred embodiment, the present disclosure provides a high-efficiency liquid-phase hydrophobic modification method, which is applicable for modifying wet gels during the preparation process of aerogel materials. Specifically, the modification of the wet gel in the aerogel preparation process refers to the surface modification of hydroxyl groups on roll-shaped wet gels to achieve hydrophobicity.

According to a preferred embodiment, the liquid-phase hydrophobic modification of the wet gel in the aerogel material preparation process may specifically include the following steps.

### Step 1: Preparation of Wet Gel

An organosilicon source, ethanol, water, and a catalyst are mixed in a predetermined ratio to obtain a precursor solution A. The precursor solution A is brought into full contact with a substrate, and air inside the substrate is removed to ensure complete infiltration of the precursor solution A into the voids of the substrate. The precursor solution A filled within the voids of the substrate is then subjected to an aging treatment to obtain a wet gel B.

### Step 2: Liquid-Phase Hydrophobic Modification

The wet gel B is unwound and rewound. During this process, at least one layer of flow-guiding mesh is interleaved between layers of the wet gel. The wet gel and the flow-guiding mesh are co-wound onto a flow-guiding tray. The flow-guiding tray with the wound layers of wet gel and flow-guiding mesh is then placed into a modification tank, where it is fully immersed in a hydrophobic modifier solution, thereby accomplishing the aerogel modification process.

### Step 3: Supercritical Drying

The wet gel after hydrophobic modification is subjected to supercritical drying to obtain the final hydrophobically modified aerogel composite material.

According to a preferred embodiment, the ratio of the organosilicon source, ethanol, and water in Step 1 is a dynamic ratio.

According to a preferred embodiment, the substrate used in Step 1 may include one or more selected from the group consisting of fiberglass needle mats, fiberglass tissue mats, pre-oxidized fiber needle mats, and ceramic fiber mats. Alternatively, the substrate may be an organic open-cell foam, such as melamine foam or polyurethane foam.

According to a preferred embodiment, the aging treatment in Step 1 may be performed under ambient temperature and pressure conditions. Alternatively, it may be accelerated aging conducted at a predetermined temperature.

According to a preferred embodiment, the liquid-phase hydrophobic modification in Step 2 may be accomplished jointly by an unwinding and rewinding device, a flow-guiding tray, a liquid-phase hydrophobic modification tank, and a circulation pump.

According to a preferred embodiment, the flow-guiding mesh in Step 2 may include one or more selected from nylon mesh, polyester mesh, silk mesh, and cotton yarn mesh. Furthermore, the flow-guiding mesh may be in the form of plain weave, twill weave, satin weave, semi-twisted weave, or fully twisted weave.

According to a preferred embodiment, the unwinding and rewinding operation in Step 2 may be implemented jointly by a wet gel unwinding mechanism, a flow-guiding mesh unwinding mechanism, a rewinding mechanism, and a drive mechanism. Specifically, during the rewinding process, the flow-guiding mesh unwinding mechanism is driven to ensure that each layer of the wet gel is separated by at least one layer of the flow-guiding mesh.

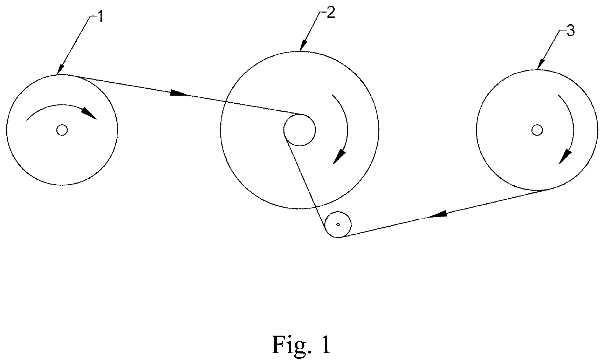

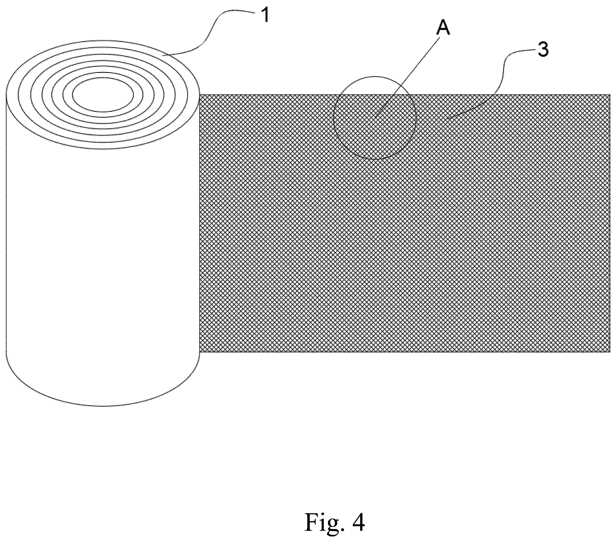

According to a preferred embodiment, as shown in Fig. 1, the wet gel 1 is wound on the wet gel unwinding mechanism to form a wet gel roll, while the flow-guiding mesh 3 is wound on the flow-guiding mesh unwinding mechanism to form a flow-guiding mesh roll. For example, by using a drive mechanism (such as a motor), the wet gel unwinding mechanism, the flow-guiding mesh unwinding mechanism, and the winding and rewinding device 2 located therebetween are driven to rotate clockwise, so as to wind the wet gel 1 onto the winding and rewinding device 2 and simultaneously wrapping at least one layer of flow-guiding mesh 3 onto the wet gel 1. This results in at least one layer of flow-guiding mesh 3 being interleaved between adjacent layers of the wet gel 1, as shown in Fig. 4.

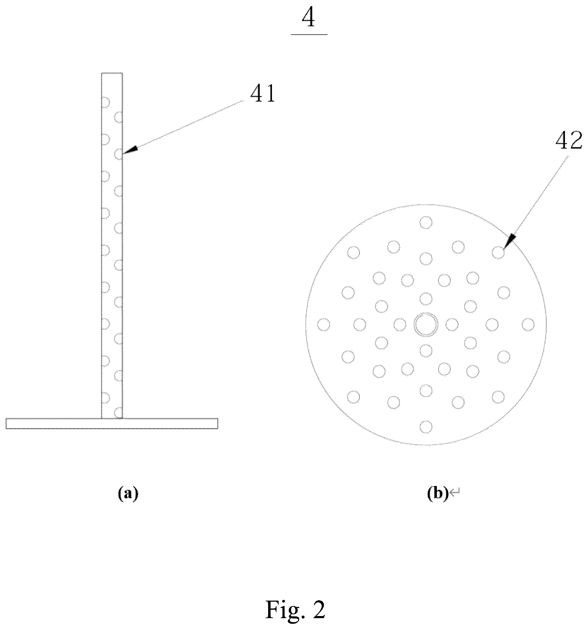

According to a preferred embodiment, the wet gel 1 and the flow-guiding mesh 3 are simultaneously rewound onto the winding and rewinding device 2. Particularly, the winding and rewinding device 2 may be a flow-guiding tray 4 as shown in Fig. 2. Specifically, the flow-guiding tray 4 generally has a "T-shaped" structure. As further shown in Fig. 2, the "T-shaped" tray may be composed of a straight tube segment 41 and a disk 42. The disk 42 serves as the base, and the straight tube segment 41 is vertically connected at or near the center of the disk 42. In some embodiments, the straight tube segment 41 may also be eccentrically positioned on the surface of the disk 42.

According to a preferred embodiment, the straight tube segment 41 and the disk 42 may be integratedly formed or detachably connected. Additionally, either or both of their surfaces may include multiple perforations for drainage. Preferably, the diameters of the perforations on the straight tube segment 41 and the disk 42 vary. For example, the diameters of perforations on the straight tube segment 41 may increase linearly or non-linearly from the top toward the bottom. Alternatively, in some embodiments, the perforations on the surface of the straight tube segment 41 may decrease linearly or non-linearly from the center toward both ends. Furthermore, the diameters of the perforations on the surface of the disk 42 may increase linearly or non-linearly in the radial direction from the center outward.

According to a preferred embodiment, the thickness of the flow-guiding mesh in Step 2 is preferably selected based on the thickness of the substrate used. In some embodiments, the flow-guiding mesh may be used in multiple stacked layers.

According to a preferred embodiment, the width of the flow-guiding mesh in Step 2 should be no less than 85% to 95% of the width of the wet gel.

According to a preferred embodiment, the hydrophobic modifier in Step 2 is one or more ethanol solutions comprising hexamethyldisilazane (HMDS), trimethoxymethylsilane (MTMS), and diethoxydimethylsilane (DMDES) as solutes.

According to a preferred embodiment, the flow path of the hydrophobic modifier in Step 2 preferably comprises extracting the modifier from the bottom of the modification tank, transferring it to the top of the modification tank via a circulation pump, and then allowing the modifier solution to flow downward uniformly through the wet gel via a "sprinkler"-like structure. Alternatively, the hydrophobic modifier may be injected into the central axis of the wet gel from the top of the modification tank and return upward through the wet gel to form a "fountain"-like flow, achieving even downward flow of the modifier solution through the wet gel.

According to a preferred embodiment, the circulation pump for the hydrophobic modifier in Step 2 remains continuously operating throughout the hydrophobic modification process to maintain the "sprinkler"-like or "fountain"-like flow described above.

According to a preferred embodiment, the placement direction of the wet gel inside the modification tank in Step 2 must ensure that the flow direction of the flow-guiding aligns with that of the hydrophobic modifier, so as to facilitate effective flow of the modifier solution.

According to a preferred embodiment, the supercritical drying fluid used in Step 3 is carbon dioxide.

According to a preferred embodiment, the present disclosure also provides a high-efficiency liquid-phase hydrophobic modification method applicable for secondary modification for aerogel materials.

Specifically, the secondary modification of the aerogel material using a high-efficiency liquid-phase hydrophobic modification method may particularly comprise the following steps.

### Step 1: Preparation of Modifier Solution

An ethanol solution is prepared in a modification tank using one or more hydrophobic modifiers as solutes.

### Step 2: Liquid-phase Hydrophobic Modification

The incompletely modified aerogel material is subjected to an unwinding and rewinding process, during which a layer of flow-guiding mesh is interlaid between adjacent layers of the aerogel material. The aerogel material and the flow-guiding mesh are co-wound around a flow-guiding tray, and the coiled structure is then transferred into the modification tank. The flow-guiding tray is fully immersed in the hydrophobic modifier solution within the modification tank, thereby accomplishing the secondary hydrophobic modification of the aerogel.

### Step 3: Supercritical Drying

The hydrophobically modified wet gel is subjected to a supercritical drying treatment to ultimately obtain a hydrophobic aerogel composite material.

According to a preferred embodiment, the hydrophobic solution in Step 1 comprises an ethanol solution in which one or more of hexamethyldisilazane (HMDS), trimethoxymethylsilane (MTMS), and diethoxydimethylsilane (DMDES) is dissolved as the solute.

According to a preferred embodiment, the incompletely modified aerogel material in Step 2 may comprise one or more selected from: non-hydrophobic or partially hydrophobic aerogel fiberglass needle mats, fiberglass tissue mats, pre-oxidized fiber needle mats, and ceramic fiber mats. Particularly, it may further comprise non-hydrophobic or partially hydrophobic aerogel organic open-cell foams, such as melamine foam or polyurethane foam.

According to a preferred embodiment, the liquid-phase hydrophobic modification in Step 2 may be accomplished cooperatively by an unwinding and rewinding device, a flow-guiding tray, a liquid-phase hydrophobic modification tank, and a circulation pump.

According to a preferred embodiment, the flow-guiding mesh in Step 2 may be one or more selected from nylon mesh, polyester mesh, silk mesh, and cotton yarn mesh. Furthermore, the flow-guiding mesh may be in the form of plain weave, twill weave, satin weave, semi-twisted weave, or fully twisted weave.

According to a preferred embodiment, the unwinding and rewinding operation in Step 2 may be accomplished jointly by a wet gel unwinding mechanism, a flow-guiding mesh unwinding mechanism, a rewinding mechanism, and a drive mechanism. Specifically, during the rewinding process, the flow-guiding mesh unwinding mechanism is actuated to ensure that a layer of the flow-guiding mesh is placed between each pair of adjacent wet gel layers.

According to a preferred embodiment, the rewinding process is as shown in Fig. 1, wherein the wet gel 1 is wound on the wet gel unwinding mechanism to form a wet gel roll, and the flow-guiding mesh 3 is wound on the corresponding unwinding mechanism to form a flow-guiding mesh roll. For example, a drive mechanism (such as a motor) may drive the wet gel unwinding mechanism, the flow-guiding mesh unwinding mechanism, and the winding and rewinding device 2 located therebetween to rotate clockwise, such that the wet gel 1 is wound onto the winding and rewinding device 2, while at least one layer of flow-guiding mesh 3 is simultaneously wound over the wet gel 1, thereby interposing the mesh layer between wet gel layers, as shown in Fig. 4.

According to a preferred embodiment, the wet gel 1 and the flow-guiding mesh 3 are rewound together onto the winding and rewinding device 2. Particularly, the winding and rewinding device 2 may be a flow-guiding tray 4, as shown in Fig. 2. Specifically, the flow-guiding tray 4 generally has a "T-shaped" structure. As further shown in Fig. 2, the "T-shaped" tray may be composed of a straight tube segment 41 and a disk 42. The disk 42 serves as the base, while the straight tube segment 41 is vertically connected at or near the center of the disk 42. Particularly, in some embodiments, the straight tube segment 41 may also be eccentrically arranged on the surface of the disk 42.

According to a preferred embodiment, the straight tube segment 41 and the disk 42 may be integratedly formed or detachably connected. Additionally, either or both of their surfaces may include multiple perforations for drainage. Preferably, the diameters of the perforations on the surface of the straight tube segment 41 and the disk 42 vary. For example, the diameters of perforations on the surface of the straight tube segment 41 may increase linearly or non-linearly from the top toward the bottom. Alternatively, in some embodiments, the perforations on the surface of the straight tube segment 41 may decrease linearly or non-linearly from the center toward both ends. Furthermore, the diameters of the perforations on the surface of the disk 42 may increase linearly or non-linearly in the radial direction from the center outward.

According to a preferred embodiment, the thickness of the flow-guiding mesh in Step 2 is preferably selected based on the thickness of the substrate used. In some embodiments, the flow-guiding mesh in Step 2 may be used in multiple stacked layers.

According to a preferred embodiment, the width of the flow-guiding mesh in Step 2 should be no less than 85% to 95% of the width of the wet gel.

According to a preferred embodiment, the flow path of the hydrophobic modifier in Step 2 preferably comprises extracting the modifier from the bottom of the modification tank, transferring it to the top of the modification tank via a circulation pump, and then allowing the modifier solution to flow downward uniformly through the wet gel via a "sprinkler"-like structure. Alternatively, the hydrophobic modifier may be injected into the central axis of the wet gel from the top of the modification tank and return upward through the wet gel to form a "fountain"-like flow, achieving even downward flow of the modifier solution through the wet gel.

According to a preferred embodiment, the circulation pump for the hydrophobic modifier in Step 2 remains continuously operating throughout the hydrophobic modification process to maintain the "sprinkler"-like or "fountain"-like flow described above.

According to a preferred embodiment, the placement direction of the wet gel inside the modification tank in Step 2 must ensure that the flow direction of the flow-guiding aligns with that of the hydrophobic modifier, so as to facilitate effective flow of the modifier solution.

According to a preferred embodiment, the supercritical drying fluid used in Step 3 is carbon dioxide.

### Embodiment 2

The present disclosure provides a system for preparing an aerogel material web, which may comprise a gel preparation module, a gel winding module, a gel modification module, and a drying module.

According to a preferred embodiment, the gel preparation module may comprise a reaction kettle, a circulation pump, a heat exchanger, a condenser, and a recovery tank. Since the gel mixing and reaction system is a relatively mature technology, its specific structure will not be described in detail herein. Particularly, in the present disclosure, the gel preparation module is mainly used to obtain the precursor material required for preparing the aerogel material web, namely, the wet gel 1. Specifically, the preparation of the wet gel 1 may refer to Step 1 described in Embodiment 1.

Furthermore, the wet gel 1 obtained from the gel preparation module may be unwound and rewound by the gel winding module, and co-wound together with a flow-guiding mesh 3 to form a roll-shaped composite wet gel material that has not undergone hydrophobic modification.

According to a preferred embodiment, the gel winding module may comprise the wet gel unwinding mechanism, the flow-guiding mesh unwinding mechanism, and the rewinding mechanism (such as the flow-guiding tray 4) as described in Embodiment 1. Specifically, the gel winding module is configured to alternately and circumferentially wind the wet gel 1 and the flow-guiding mesh 3 in stacked layers around the straight tube segment 41 of the flow-guiding tray 4. In other words, the gel winding module can be used to preliminarily form a roll-shaped composite wet gel material - unmodified or only partially modified - on the flow-guiding tray 4. This composite material comprises alternately wound layers of the wet gel 1 and the flow-guiding mesh 3. Alternatively, at least one layer of the flow-guiding mesh 3 may be interposed between adjacent layers of the wet gel 1.

According to a preferred embodiment, the gel modification module is configured to provide a modifier capable of cyclic immersion of the flow-guiding tray 4 carrying the composite wet gel material web. In other words, the gel modification module uses the modifier in a circulating soaking process to achieve hydrophobic modification of the composite wet gel wound on the flow-guiding tray 4.

According to a preferred embodiment, the drying module is configured to perform supercritical drying on the hydrophobically modified composite wet gel material, thereby forming a composite aerogel material.

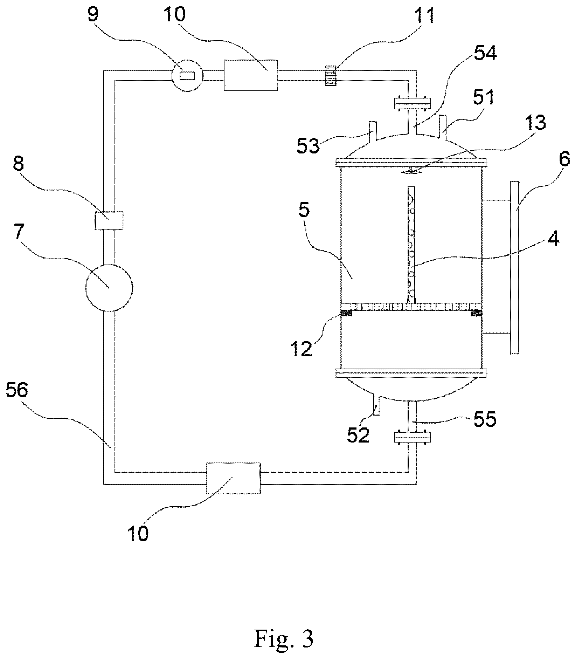

According to a preferred embodiment of the present disclosure, the gel modification module may comprise a modification tank 5. Particularly, the detailed structure of the modification tank 5 is shown in Fig. 3.

According to a preferred embodiment, as shown in Fig. 3, the upper and lower covers of the modification tank 5 may respectively be provided with a liquid inlet 51 and a liquid outlet 52, which are respectively used for injecting the modifier solution and discharging waste liquid. Furthermore, operable valves may be provided at the liquid inlet 51 and the liquid outlet 52 to control the flow rates of injection and discharge.

According to a preferred embodiment, the upper and lower covers of the modification tank 5 may be detachably connected to the main body of the modification tank 5. Specifically, the covers may be connected to the main body of the modification tank 5 using sealing rings and bolts.

According to a preferred embodiment, as shown in Fig. 3, the upper cover of the modification tank 5 may be provided with a monitoring port 53. Specifically, the monitoring port 53 may be used to install a data acquisition device. For example, a temperature sensor may be installed at the monitoring port 53 to monitor the internal temperature of the modification tank 5 in real time. Particularly, the temperature sensor may be fixed at the monitoring port 53 using a sealing ring and clamp.

According to a preferred embodiment, as shown in Fig. 3, the upper and lower covers of the modification tank 5 may further be provided with an upper circulation port 54 and a lower circulation port 55, respectively. Specifically, these circulation ports may be connected to the respective covers of the modification tank 5 via sealing rings and bolts.

Furthermore, the upper circulation port 54 and the lower circulation port 55 of the modification tank 5 are connected by an external circulation pipe 56. Particularly, the modifier solution may be introduced into the modification tank 5 through the liquid inlet 51, then flow out through the lower circulation port 55 at the lower cover of the modification tank 5 into the circulation pipe 56, and be returned into the modification tank 5 via the circulation pipe 56 through the upper circulation port 54 at the upper cover of the modification tank 5, thereby enabling cyclic soaking of composite wet gel layers wound on the flow-guiding tray 4 in the modification tank 5 to accomplish the hydrophobic modification.

According to a preferred embodiment, as shown in Fig. 3, the circulation pipe 56 is provided with a circulation pump 7. Specifically, the circulation pump 7 may be used to pump the modifier solution out of the modification tank 5 and back into it for continuous circulation.

According to a preferred embodiment, as shown in Fig. 3, a control valve 8 may be installed on the circulation pipe 56, particularly downstream of the circulation pump 7. Specifically, the control valve 8 is configured to regulate the flow rate of the modifier solution circulating through the modification tank 5.

According to a preferred embodiment, as shown in Fig. 3, in the section of the circulation pipe 56 connected to the upper circulation port 54 of the modification tank 5, a flow meter 9, a filter 10, and a connector 11 are sequentially installed.

According to a preferred embodiment, the connector 11 is positioned near the upper circulation port 54 of the modification tank 5. Particularly, the connector 11 enables a detachable connection between the circulation pipe 56 and the upper circulation port 54 of the modification tank 5.

According to a preferred embodiment, as shown in Fig. 3, the flow meter 9 is located downstream to the control valve 8. Furthermore, the flow meter 9 monitors the flow rate of the modifier solution being pumped into the modification tank 5.

According to a preferred embodiment, as shown in Fig. 3, the filter 10 is situated downstream of the flow meter 9. Specifically, the filter 10 removes aerogel powder carried by the modifier solution, preventing clogging of the circulation pipe 56. Additionally, a filter 10 can be installed in the section of the circulation pipe 56 connected to the lower circulation port 55 of the modification tank 5.

According to a preferred embodiment, as shown in Fig. 3, the modification tank 5 is equipped with a level gauge 6. Specifically, the level gauge 6 monitors the real-time liquid level inside the modification tank 5.

According to a preferred embodiment, the modification tank 5 is equipped with a heating sleeve. Specifically, the heating sleeve heats the modification tank 5 using a circulating fluid (e.g., water). Furthermore, the heating sleeve can be controlled by an on-site controller (e.g., a PLC) to regulate the temperature in the main body of the modification tank 5.

According to a preferred embodiment, as shown in Fig. 3, a tray support 12 is installed inside the modification tank 5. Furthermore, the flow-guiding tray 4 is secured within the modification tank 5 via the tray support 12. Specifically, the tray support 12 is positioned near the bottom region of the modification tank 5. The disk 42 of the flow-guiding tray 4 in mounted on the tray support 12, aligning the axis of the straight tube segment 41 of the flow-guiding tray 4 approximately with a nozzle 13 installed at the top of the modification tank 5.

According to a preferred embodiment, as shown in Fig. 3, a nozzle 13 is installed at the top interior of the modification tank 5. The nozzle 13 sprays the modifier solution onto the incompletely modified composite aerogel material wound around the straight tube segment 41 of the flow-guiding tray 4. Alternatively, the modifier solution sprayed from the nozzle 13 flows along the straight tube segment 41 of the flow-guiding tray 4 from top to bottom, uniformly permeating the composite wet gel material wound around the straight tube segment 41 in a "sprinkler"-like manner. The modifier solution is recirculated and pumped to immerse the straight tube segment 41, thereby accomplishing the modification of the composite wet gel material. Furthermore, the disk 42 of the flow-guiding tray 4 has several holes, allowing the modifier solution to pass therethrough and be drawn out via the lower circulation port 55 at the bottom of the modification tank 5 for recirculation.

On the other hand, the straight tube segment 41 of the flow-guiding tray 4 may also have a fluid channel extending along its axial direction for the modifier solution to flow therethrough. Furthermore, the nozzle 13 at the top interior of the modification tank 5 can be connected to the inlet of the fluid channel in the straight tube segment 41. The modifier solution delivered by the nozzle 13 fills the entire fluid channel of the straight tube segment 41 through the inlet. Particularly, since the straight tube segment 41 has multiple holes of varying sizes along its periphery, the modifier solution in the fluid channel can flow radially outward through these holes toward the composite wet gel material surrounding the straight tube segment 41. The modifier solution alternately passes through the wet gel 1 and the flow-guiding mesh 3, thereby accomplishing hydrophobic modification of the entire composite wet gel material.

In some embodiments, the straight tube segment 41 of the flow-guiding tray 4 is configured to be rotatable. Specifically, when the nozzle 13 supplies the modifier solution to the fluid channel of the straight tube segment 41, the rotatable straight tube segment 41 generates centrifugal force, facilitating the radial outward flow of the modifier solution from the fluid channel through the straight tube segment 41, sequentially passing through the wet gel 1 and the flow-guiding mesh 3. Particularly, this enhances the flow efficiency of the modifier solution, preventing stagnation within the composite wet gel material and thereby improving the effectiveness of hydrophobic modification. For example, if the straight tube segment 41 of the flow-guiding tray 4 is detachably connected to the center of the disk 42, a rotary motor can be installed at the connection point, with its output shaft connected to the bottom of the straight tube segment 41 to drive its rotation.

Particularly, during the infiltration process, the extraction and pumping flow rates of the modifier solution may be controlled via a control valve, such that while at least a portion of the modifier solution in the modification tank 5 soaks the flow-guiding tray 4, another portion of the modifier solution is recirculated and pumped back into the modification tank 5. The recirculated modifier solution flows from the top of the modification tank 5 and infiltrates the straight tube segment 41 of the flow-guiding tray 4 from top to bottom. This alternate and rotational infiltration mode increases the likelihood of contact between the modifier solution and the composite wet gel material, especially providing more opportunities for those portions of the modifier solution that were previously underutilized or insufficiently contacted to interact with the composite wet gel material, thereby facilitating hydrophobic modification. Furthermore, the combined infiltration method integrating static soaking and dynamic flushing improves both the efficiency and effectiveness of the hydrophobic modification process, maximizes utilization of the modifier solution, and reduces resource consumption and associated costs.

In some embodiments, when the flow-guiding tray 4 is placed inside the modification tank 5, the straight tube segment 41 of the flow-guiding tray 4 is configured to be eccentrically positioned. Furthermore, the straight tube segment 41 of the flow-guiding tray 4 may be configured to rotate circumferentially around the disk 42, and to rotate about its own axis. In other words, the straight tube segment 41 of the flow-guiding tray 4 may simultaneously revolve around the center of the disk 42 and rotate about its own axis. Particularly, in the present embodiment, the particular structure that enables the straight tube segment 41 of the flow-guiding tray 4 to undergo both revolution and self-rotation is not limited, as along as the required motions can be realized. For example, an annular sliding track may be formed on the surface of the disk 42, within which the straight tube segment 41 is slidably accommodated. The output shaft a drive motor located at the center of the disk 42 may be connected to the straight tube segment 41 to drive its circumferential revolution. Furthermore, the driving motor and its shaft may be encapsulated within a housing to prevent corrosion by the solution.

In some embodiments, the straight tube segment 41 of the flow-guiding tray 4 may be configured to perform only revolution. In other embodiments, the straight tube segment 41 of the flow-guiding tray 4 may be configured to perform only self-rotation. Preferably, the straight tube segment 41 of the flow-guiding tray 4 is configured to simultaneously revolve and rotate.

Specifically, when the nozzle 13 at the top of the inner cavity of the modification tank 5 supplies the modifier solution to the flow-guiding tray 4 in a generally "sprinkler"-like manner, the flow-guiding tray 4 may revolve circumferentially around the center of the disk 42 and simultaneously undergo self-rotation. In such a case, the straight tube segment 41 of the flow-guiding tray 4 receives the modifier solution supplied by the nozzle 13 from different angles due to its rotating and/or revolving motion, thereby allowing the modifier solution to sufficiently infiltrate all parts of the composite wet gel material wound around the straight tube segment 41. Furthermore, the first centrifugal force generated by the revolution and the second centrifugal force generated by the self-rotation of the straight tube segment 41 of the flow-guiding tray 4 significantly enhance the alternating flow of the modifier solution along the flow channels in the flow-guiding mesh between the wet gel 1 and the flow-guiding mesh 3, thereby improving the hydrophobic modification efficiency and effect for the composite wet gel material.

According to a preferred embodiment, after the composite wet gel material has undergone hydrophobic modification in the modification tank 5, the flow-guiding tray wound with the composite wet gel material is transferred to a drying module. Specifically, the drying module may include a drying kettle, a heating device, and a temperature controller.

According to a preferred embodiment, the composite wet gel material wound around the flow-guiding tray 4 is subjected to supercritical drying using a supercritical-drying medium. This process may specifically include: transferring the flow-guiding tray 4 to a drying kettle, refrigerating the supercritical-drying medium (e.g., CO₂) using the refrigeration unit, delivering the refrigerated supercritical drying medium to the drying kettle via a pressurizing pump in a low-temperature feeding manner, and heating the drying kettle using a heating device located at or near the bottom of the drying kettle, the operation of which is controlled by a temperature controller. Furthermore, during the supercritical drying process, the composite wet gel material wound around the flow-guiding tray 4 is dried, and the solvents and modifier solution produced from the supercritical drying process are discharged from the drying kettle, thereby yielding the aerogel. Particularly, the supercritical drying may be performed at a temperature of 40 °C to 50 °C and a pressure of 10.0 MPa to 15.0 MPa.

In some embodiments, the drying module may be integrated into the main body of the modification tank 5. Specifically, a portion or all of the modifier solution in the modification tank 5 may be extracted, and the dry medium (e.g., CO₂) may be delivered into the modification tank 5 via the circulation pump 7, thereby performing supercritical drying on the composite wet gel material on the flow-guiding tray 4 inside the modification tank 5.

According to a preferred embodiment, supercritical drying of the composite wet gel material wound around the flow-guiding tray 4 within the modification tank 5 using a supercritical-drying medium may specifically include: refrigerating the supercritical-drying medium (e.g., CO₂) using a refrigeration unit, delivering the refrigerated supercritical-drying medium into the modification tank 5 via a pressurizing pump in a low-temperature feeding manner, and heating the modification tank 5 through an external heating sleeve, the operation of which is controlled by a temperature controller. Furthermore, the composite wet gel material wound around the flow-guiding tray 4 is subjected to supercritical drying, and the resulting solvent and residual modifier solution are discharged through the liquid outlet 52, thereby obtaining the aerogel. Particularly, the supercritical drying may be performed at a temperature of 40 °C to 50 °C and a pressure of 10.0 MPa to 15.0 MPa.

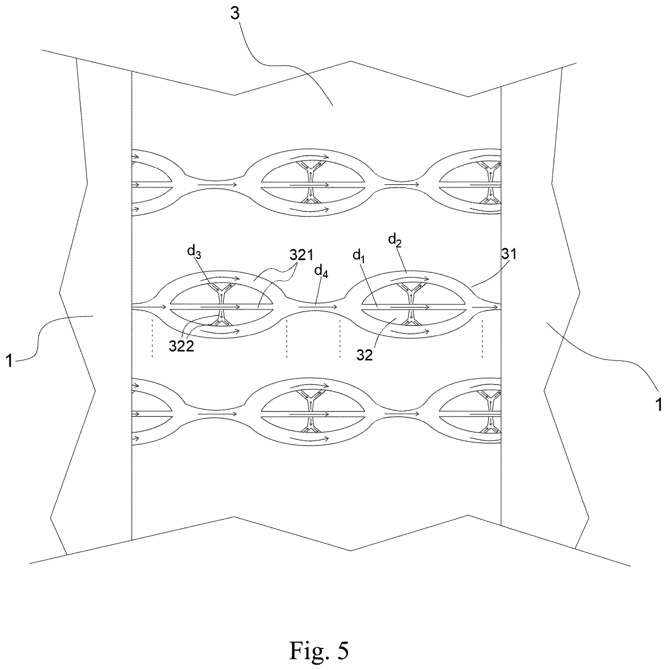

According to a preferred embodiment of the present disclosure, as shown in Fig. 5, the flow-guiding mesh 3, which has a certain thickness, is provided with several flow-guiding channels 31 that allow the modifier solution to flow continuously and unobstructedly between layers of the wet gel 1. Particularly, the flow-guiding channels 31 enable smooth flow of the modifier solution between the layers of the wet gel, thereby accomplishing effective hydrophobic modification of the roll-shaped composite wet gel material.

According to a preferred embodiment, as shown in Fig. 5, the flow-guiding channels 31 are formed by several continuous branched flow-guiding sections 32. Specifically, each branched flow-guiding section 32 may comprise multiple primary distribution links 321 and secondary distribution links 322.

According to a preferred embodiment of the present disclosure, there may be three or more primary distribution links 321. These primary distribution links 321 divide the flow-guiding channel 31 into multiple independent flow-guiding pathways.

According to a preferred embodiment, the primary distribution links 321 are configured to shape the flow-guiding channel 31 in a form that first expands and then contracts. Specifically, as shown in Fig. 5, the three primary distribution links 321 define the flow-guiding channel 31 as a trifurcated pathway, i.e., a Y-shaped channel in which the flow first diverges and then converges.

According to a preferred embodiment, merging links are formed between adjacent branched flow-guiding sections 32. Furthermore, in the present disclosure, the sum of the diameters of the multiple primary distribution links 321 is less than or equal to the diameter of the merging link. Alternatively, the diameter of any individual primary distribution link 321 is smaller than that of the merging link. In view of this, in the present disclosure, the flow velocity of the modifier solution through the primary distribution links 321 and the merging links satisfies the relationship: υ_{P}>υ_{M}.

In particular, when the modifier solution flows along the wet gel layers via the flow-guiding channel 31 within the guiding mesh 3, the merging link of the flow-guiding channel 31 is divided into multiple narrowed flow paths by the primary distribution links 321. This configuration enhances the mobility of the modifier solution within the flow-guiding channel 31 (i.e., increases the flow velocity), facilitating rapid flow of the modifier solution between adjacent wet gel layers. It also promotes the outward discharge of other solvents or solutes replaced during the hydrophobic modification, thereby preventing retention of the modifier solution and other solvents between layers and ensuring sufficient contact with the wet gel, which is critical for the preparation of hydrophobic aerogel materials.

According to a preferred embodiment, as shown in Fig. 5, the branched flow-guiding section 32 formed by the multiple primary distribution links 321 is configured as a generally ellipsoidal flow path with a raised central portion. Furthermore, the side primary distribution links 321 located at both sides of the branched flow-guiding section 32 are generally streamlined in shape. The central primary distribution link 321 of the branched flow-guiding section 32 is in fluid communicated with the adjacent merging links on both sides. Particularly, the radius of curvature at the front end of the branched flow-guiding section 32 is preferably greater than that at the rear end. Accordingly, when the modifier solution flows through the rear end of the branched flow-guiding section 32, vortices are generated within the flow-guiding channels 31 to prevent retention of the modifier solution.

According to a preferred embodiment of the present disclosure, the branched flow-guiding section 32 of the flow-guiding channel 31 further comprise multiple secondary distribution links 322 configured to interconnect radially adjacent primary distribution links 321. Particularly, the diameter of each secondary distribution link 322 may be smaller than that of the primary distribution links 321 or the merging link. Preferably, in the present disclosure, the diameter of the secondary distribution links 322 is smaller than both the primary distribution links 321 and the merging link.

According to a preferred embodiment, as shown in Fig. 5, the multiple secondary distribution links 322 form a generally "Y-shaped" manifold between adjacent primary distribution links 321. Specifically, the modifier solution enters the primary distribution links 321 via the merging links and flows through the primary distribution links 321 at a velocity greater than that in the merging link, thereby proceeding through the diverging-then-converging flow paths defined by the primary distribution links 321 toward the downstream merging link and the branched flow-guiding section 32. Furthermore, during flow within the primary distribution links 321, pressure differences caused by velocity variations induce the modifier solution in the primary distribution links 321 to enter and flow through the secondary distribution links 322 and subsequently return to or merge with the corresponding primary distribution links. In other words, the modifier solution in the primary distribution links 321 undergoes secondary divergence and convergence via the secondary distribution links 322 with smaller diameters.

According to a preferred embodiment, the secondary distribution links 322 are mainly configured to further regulate or improve the flow rate and pressure variations of the modifier solution at each inlet or outlet node of the flow-guiding channel 31. The pressure differential facilitates continuous and smooth flow of the modifier solution within the flow-guiding channel 31, thereby ensuring that the modifier solution continuously passes through and diffuses into the wet gel between layers of the guiding mesh 3 to complete the hydrophobic modification of the wet gel material.

According to a preferred embodiment, the diameter of the central primary distribution link 321 within the branched flow-guiding section 32 may be smaller than those of the side primary distribution links 321. Specifically, the modifier solution in the central primary distribution link 321 flows at a higher velocity and lower pressure than that in the side primary distribution links 321. In view of this, the modifier solution in the side primary distribution links 321 tends to flow toward the central primary distribution link 321. Alternatively, the pressure differences formed between radially adjacent primary distribution links 321 induce an increased flow rate in the central primary distribution link 321. Since the central primary distribution link 321 is in linear communication with the axially adjacent merging links, unlike the curved side channels, the modifier solution is less likely to stagnate or clog, thus enabling a smoother fluid passage.

According to a preferred embodiment of the present disclosure, the flow velocities of the modifier solution through the primary distribution links 321, the secondary distribution links 322, and the merging links satisfy the relationship: υ_{S}>υ_{P}>υ_{M}.

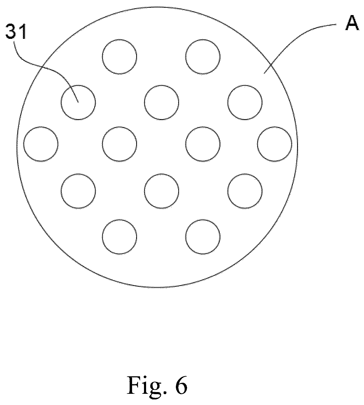

According to a preferred embodiment of the present disclosure, multiple flow-guiding channels 31 in the flow-guiding mesh 3 are preferably arranged in a staggered configuration. Specifically, as shown in Fig. 6, when viewed in cross-section along the thickness direction of the flow-guiding mesh 3, the flow-guiding channels 31 are arranged in a radially staggered pattern. Alternatively, at the same horizontal level, at least one radially staggered flow-guiding channels 31 is positioned between adjacent flow-guiding channels 31. Particularly, when the flow-guiding channels 31 are arranged in the above manner, pressure differences are generated again between the radially staggered and/or adjacent flow-guiding channels 31. These pressure differences promote the diffusion and flow of the modifier solution between adjacent flow-guiding channels 31, enabling the modifier solution to continuously flow through and infiltrate the wet gel layers while also facilitates the flow of the solvent or solute displaced during the hydrophobic modification.

Further, in the present invention, the branched flow-guiding sections 32 in adjacent flow-guiding channels 31 may be arranged in a staggered manner along the axial direction of the flow-guiding channels 31. Specifically, as shown in Fig. 5, when viewed in the radial direction of the flow-guiding channels 31, any two adjacent branched flow-guiding sections 32 within adjacent flow-guiding channels 31 are located on different cross-sections. Likewise, when the branched flow-guiding sections 32 in adjacent flow-guiding channels 31 are arranged in this staggered manner, the branched flow-guiding sections 32 staggered both radially and axially can generate pressure differences again between each other. These pressure differences promote the diffusive flow of the modifier solution between the adjacent flow-guiding channels 31.

According to a preferred embodiment of the present invention, the straight tube section 41 of the flow-guiding tray 4 may be rotatable. Further, during the hydrophobic modification of the roll-shaped composite wet gel material wound on the flow-guiding tray 4 using the modifier tank 5, a modifier solution may be injected into the fluid passage inside the straight tube section 41 of the flow-guiding tray 4 via a nozzle 13 provided at the top of the modifier tank 5. Furthermore, while injecting the modifier solution into the straight tube section 41 of the flow-guiding tray 4, the straight tube section 41 may be driven to rotate by a driving motor disposed at its bottom end. The modifier solution may then flow out through several holes provided around the circumference of the straight tube section 41 into the external roll-shaped composite wet gel layers. Under the diverging and converging effect of the flow-guiding channels 31 in the flow-guiding mesh 3 arranged between the gel layers, the modifier solution can flow toward the outer gel layers. Particularly, when the straight tube section 41 is rotatable, its rotation generates a centrifugal force that accelerates the flow of the modifier solution between the wet gel layers, thereby enhancing and improving the hydrophobic modification effect of the modifier solution on the wet gel material. As a result, the final prepared composite aerogel material exhibits excellent hydrophobic performance.

### Embodiment 3

The present embodiment provides further improvements to Embodiment 1 and/or Embodiment 2, and what is identical to its counterpart in the previous embodiment will not be repeated in the following description.

Based on the system for preparing an aerogel material web as described in the foregoing embodiments, the present embodiment provides a method for preparing an aerogel material web. Specifically, the method comprises the following steps:
providing wet gel 1 that is used to prepare the aerogel material web,
winding the wet gel 1 and the flow-guiding mesh 3 alternately into layers so as to form a roll-shaped composite wet gel material,
performing hydrophobic modification on the roll-shaped composite wet gel material using a modifier solution, and
performing supercritical drying on the hydrophobically modified composite wet gel material.

According to a preferred embodiment of the present embodiment, the flow-guiding mesh 3 may adopt the configuration described in the foregoing embodiments, comprising multiple alternately connected branched flow-guiding sections 32 and merging-linked flow-guiding channels 31.

In addition, the straight tube section 41 of the flow-guiding tray 4 may be rotatable. Further, during the hydrophobic modification of the roll-shaped composite wet gel material wound on the flow-guiding tray 4 using the modifier tank 5, a modifier solution may be injected into the fluid passage inside the straight tube section 41 of the flow-guiding tray 4 via a nozzle 13 provided at the top of the modifier tank 5. Furthermore, while injecting the modifier solution into the straight tube section 41 of the flow-guiding tray 4, the straight tube section 41 may be driven to rotate by a driving motor disposed at its bottom end. The modifier solution may then flow out through several holes provided around the circumference of the straight tube section 41 into the external roll-shaped composite wet gel layers. Under the diverging and converging effect of the flow-guiding channels 31 in the flow-guiding mesh 3 arranged between the gel layers, the modifier solution can flow toward the outer gel layers. Particularly, when the straight tube section 41 is rotatable, its rotation generates a centrifugal force that accelerates the flow of the modifier solution between the wet gel layers, thereby enhancing and improving the hydrophobic modification effect of the modifier solution on the wet gel material. As a result, the final prepared composite aerogel material exhibits excellent hydrophobic performance.

It should be noted that the above specific embodiments are exemplary. Skilled artisans, inspired by the present disclosure, can devise various solutions that fall within the scope of the present application and are protected by it. Furthermore, those skilled in the art will recognize that the description and accompanying drawings provided herein are illustrative and form no limitation to any of the appended claims. The scope of the present application is defined by the appended claims and equivalents thereof. The present application provided herein encompasses multiple inventive concepts, indicated by phrases such as "preferably", "according to a preferred embodiment" or "optionally", each denoting a distinct concept disclosed in the respective paragraph. The applicant reserves the right to file one or more divisional applications based on each inventive concept.

## Claims

1. A system for preparing an aerogel material web, the system comprising:
a gel preparation module, configured to obtain a wet gel (1) for preparing the aerogel material web;
a gel winding module, configured to alternately stack and wind the wet gel (1) and a flow-guiding mesh (3) to form a roll-shaped composite wet gel material;
a gel modification module, configured to perform hydrophobic modification on the composite wet gel material using a modifier solution; and
a drying module, configured to perform supercritical drying on the hydrophobically modified composite wet gel material;
wherein the flow-guiding mesh (3) comprises multiple interleaved flow-guiding channels (31), allowing the modifier solution to flow between the layers of the wet gel (1), and the flow-guiding channels (31) are structured with multiple alternately connected branched flow-guiding sections (32) and merging links to regulate the flow rate of the modifier solution between the layers of the wet gel (1).

2. The system of claim 1, wherein the branched flow-guiding sections (32) comprise multiple primary distribution links (321), each of which connects axially adjacent merging links in a diverging-converging manner, and at least one of the primary distribution links (321) is linearly connected to the merging links.

3. The system of claim 1 or 2, wherein the branched flow-guiding sections (32) further comprise multiple secondary distribution links (322), each of which is arranged to interconnect radially adjacent primary distribution links (321).

4. The system of any of claims 1 to 3, wherein in each branched flow-guiding section (32), the centrally located primary distribution link (321) that is linearly connected to adjacent merging links has a smaller diameter than the off-center primary distribution links (321) that are non-linearly connected to the same adjacent merging links.

5. The system of any of claims 1 to 4, wherein the total diameter of multiple primary distribution links (321) is less than or equal to that of the merging links.

6. The system of any of claims 1 to 5, wherein the diameter of the secondary distribution links (322) is smaller than that of the primary distribution links (321) and/or the merging links.

7. The system of any of claims 1 to 6, wherein the branched flow-guiding sections (32) in the adjacent flow-guiding channels (31) are axially staggered, such that when viewed in a radial direction of the flow-guiding channels (31), any two adjacent branched flow-guiding sections (32) in neighboring flow-guiding channels (31) are positioned at different cross-sections.

8. The system of any of claims 1 to 7, wherein each branched flow-guiding sections (32) has a radius of curvature at its front end that is greater than that at its rear end.

9. The system of any of claims 1 to 8, wherein the gel winding module comprises a flow-guiding tray (4) configured to wind the roll-shaped composite wet gel material, the flow-guiding tray (4) comprising:
a straight tube segment (41), configured to support the roll-shaped composite wet gel material formed by alternately stacking and winding the wet gel (1) and the flow-guiding mesh (3), the straight tube section (41) having multiple perforations allowing the modifier solution to flow therethrough; and
a disk (24), serving as a base for connecting the straight tube segment (41) and having multiple perforations to facilitate the circulation of the modifier solution.

10. The system of any of claims 1 to 9, wherein the straight tube segment (41) and the disk (24) have perforations with varying diameters across part or all of their surfaces.

11. The system of any of claims 1 to 10, wherein the straight tube segment (41) is configured to rotate relative to the disk (24) and defines a fluid channel that accommodates and directs the modifier solution toward the perforations.

12. The system of any of claims 1 to 11, wherein the gel modification module comprises a modification tank (5), configured to accommodate the flow-guiding tray (4) and provide a recirculating modifier solution to the flow-guiding tray (4) wound with the roll-shaped composite wet gel material.

13. A method for preparing an aerogel material web, the method comprising:
providing a wet gel (1) for preparing the aerogel material web;
alternately stacking and winding the wet gel (1) and a flow-guiding mesh (3) to form a roll-shaped composite wet gel material;
performing hydrophobic modification on the roll-shaped composite wet gel material using a modifier solution; and
performing supercritical drying on the hydrophobically modified composite wet gel material;
wherein the flow-guiding mesh (3) comprises multiple interleaved flow-guiding channels (31) that allow the modifier solution to flow between the layers of the wet gel (1), and the flow-guiding channels (31) are structured with multiple alternately connected branched flow-guiding sections (32) and merging links to regulate the flow rate of the modifier solution between the wet gel (1) layers.

14. The method of claim 13, wherein performing hydrophobic modification on the roll-shaped composite wet gel material using the modifier solution comprises:
filling the gel modification module with a portion of the modifier solution to immerse the flow-guiding tray (4) carrying the roll-shaped composite wet gel material, and recirculating and pumping another portion of the modifier solution into the gel modification module to allow the modifier solution to infiltrate the flow-guiding tray (4) from top to bottom.

15. The method of claim 13 or 14, wherein performing supercritical drying on the hydrophobically modified composite wet gel material comprises: cooling a supercritical drying medium; and
feeding the cooled supercritical drying medium under pressure into the drying module containing the hydrophobically modified composite wet gel material in a low-temperature feeding mode, and heating the drying module.
